# EUROPEAN PATENT APPLICATION

(11) **EP 2 451 105 A1**
(43) Date of publication of application: **09.05.2012**
(21) Application number: 09846782.2
(22) Date of filing: 29.06.2009
(51) Int. Cl.: H04J 99/00, H04B 7/04, H04J 11/00

(54) **RADIO COMMUNICATION DEVICE, TRANSMITTING POWER CONTROLLING METHOD, AND COMMUNICATION QUALITY TRANSMITTING METHOD**

(71) Applicant: Fujitsu Limited, Kawasaki-shi, Kanagawa 211-8588 (JP)
(72) Inventor: TAKAHARA, Shinji, Kawasaki-shi Kanagawa 211-8588 (JP); SHIRAISHI, Yuji, Kawasaki-shi Kanagawa 211-8588 (JP); MIYAZAKI, Toshiya, Kawasaki-shi Kanagawa 211-8588 (JP)
(74) Representative: Holz, Ulrike
(86) International application number: PCT/JP2009/061827
(87) International publication number: WO 2011/001489

(57) **Abstract**

Parallel transmission of information is enabled even if wireless communication devices are situated in a non-line-of-sight environment.

A communication quality receiver (1a) of a wireless communication device (1) receives information about antenna communication qualities of respective antennas (1da to 1dd) from a wireless communication device (2) that has received data. A transmission power controller (1b) controls transmission powers of the respective antennas (1da to 1dd) in accordance with the received antenna communication qualities. A communication quality calculator (2a) of the wireless communication device (2) calculates, based on a pilot signal included in the data received by antennas (2ca to 2cd), the antenna communication qualities of the respective antennas (1da to 1dd) of the wireless communication device (1) that has transmitted the data. A communication quality transmitter (2b) transmits information about the calculated antenna communication qualities of the respective antennas (1da to 1dd) to the wireless communication device (1).

## Description

Technical Field The present invention relates to wireless communication devices equipped with a plurality of antennas for performing parallel communication of data, transmission power control methods, and communication quality transmission methods.

### Background Art

MIMO (Multi Input Multi Output) has been proposed as a technology for improving the communication bandwidth of wireless communication systems. With MIMO, data is transmitted in parallel from multiple antennas and received by multiple antennas to improve the communication bandwidth (see Patent Literatures 1 and 2, for example).

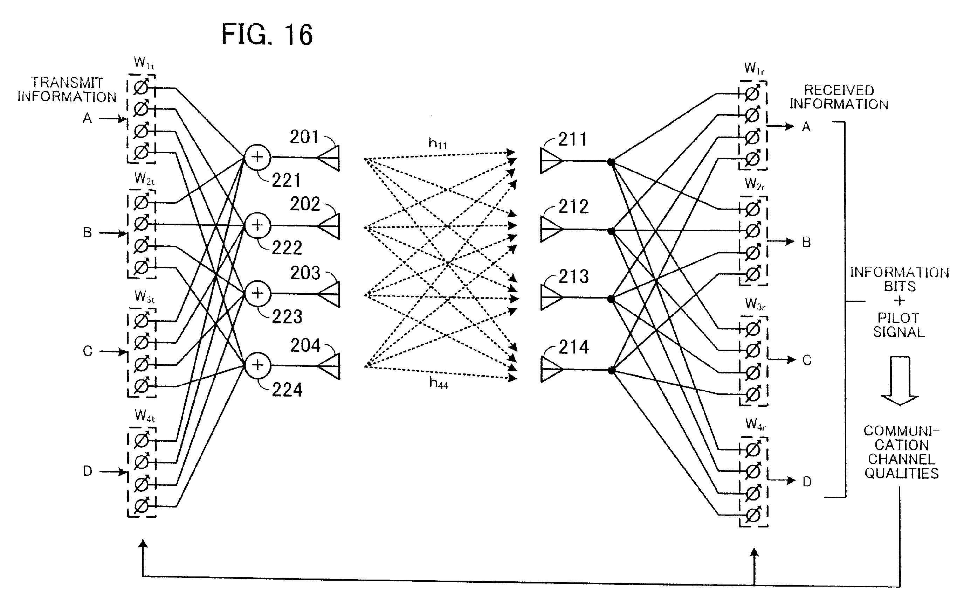

FIG. 16 illustrates a MIMO communication system. More specifically, FIG. 16 illustrates antennas 201 to 204 of a wireless communication device (transmitting device) for transmitting data, and antennas 211 to 214 of another wireless communication device (receiving device) for receiving the data. By way of example, MIMO communication using 4 x 4 antennas will be explained with reference to FIG. 16.

The transmitting device multiplies parallel transmit information items A to D by transmission weights W₁ₜ to W₄ₜ, respectively, as illustrated in FIG. 16. The transmission weights W₁ₜ to W₄ₜ are eigenvectors of a 4 x 4 response matrix H of communication channels between the antennas 201 to 204 and the antennas 211 to 214. The transmit information items A to D multiplied by the respective transmission weights W₁ₜ to W₄ₜ are added together by individual adders 221 and 224, as illustrated in FIG. 16, and are transmitted wirelessly from the antennas 201 to 204 to the receiving device.

The antennas 211 to 214 of the receiving device receive the data transmitted from the antennas 201 to 204 of the transmitting device. The data received by the antennas 211 to 214 is individually multiplied by reception weights W₁ᵣ to W₄ᵣ. The reception weights W₁ᵣ to W₄ᵣ are eigenvectors of the response matrix H of the communication channels between the antennas 201 to 204 and the antennas 211 to 214.

The transmit information items A to D include information bits to be transmitted to the receiving device, and a pilot signal used for calculating the qualities of the communication channels between the antennas 201 to 204 and the antennas 211 to 214. Based on the pilot signal included in the received information items A to D, the receiving device calculates the qualities of the communication channels (in FIG. 16, indicated by dotted arrows) between the antennas 201 to 204 and the antennas 211 to 214. The receiving device feeds back the calculated qualities of the communication channels to the transmitting device.

The transmitting device and the receiving device each calculate the communication channel response matrix H from the qualities of the communication channels between the antennas 201 to 204 and the antennas 211 to 214. Then, from the communication channel response matrix H, the transmitting device and the receiving device individually calculate eigenvalues λ₁ to λ₄ and eigenvectors of the communication channel response matrix H. Namely, the transmitting device and the receiving device calculate the transmission weights W₁ₜ to W₄ₜ and the reception weights W₁ᵣ to W₄ᵣ, respectively, from the communication channel response matrix H.

In this manner, each of the transmitting device and the receiving device calculates the communication channel response matrix H on the basis of the pilot signal, and then calculates the eigenvalues λ₁ to λ₄ and eigenvectors (transmission weights W₁ₜ to W₄ₜ and reception weights W₁ᵣ to W₄ᵣ) of the response matrix H. This enables the MIMO communication system of FIG. 16 to create four data transmission paths between the transmitting device and the receiving device, whereby the multiple transmit information items A to D can be transmitted in parallel by using carrier waves of identical frequency.

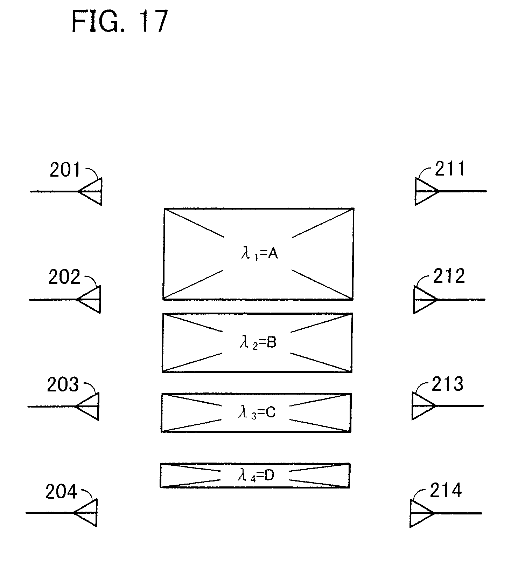

FIG. 17 illustrates sizes of the paths between the transmitting device and the receiving device. Specifically, FIG. 17 illustrates the antennas 201 to 204 and the antennas 211 to 214, all appearing in FIG. 16. The eigenvalues λ₁ to λ₄ calculated from the communication channel response matrix H usually have a relationship of λ₁ > λ₂ > λ₃ > λ₄.

Where the transmit information items A to D are transmitted in parallel, the sizes of the four paths (capacities of transmission channels), via which the transmit information items A to D are transmitted, are dependent on the magnitude of the eigenvalues λ₁ to λ₄ of the communication channel response matrix H, as illustrated in FIG. 17. Thus, if the eigenvalue λ₄, for example, is much smaller than the other eigenvalues λ₁ to λ₃, it is difficult to transmit information via the path corresponding to the eigenvalue λ₄.

Also, if the first eigenvalue is much greater than the others and thus a relationship of λ₁ » λ₂, λ₃, λ₄ holds, the accuracy of eigenvalue decomposition of the communication channel response matrix H lowers, making the parallel transmission of information difficult. Such a situation where the first eigenvalue is much greater than the second and succeeding eigenvalues arises, for example, when the antennas 201 to 204 and the antennas 211 and 214 are situated in a non-line-of-sight environment.

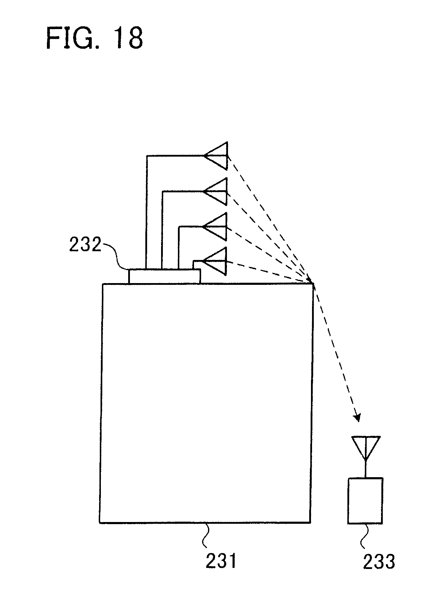

FIG. 18 is a first diagram exemplifying a non-line-of-sight environment. In FIG. 18, a building 231 and a mobile unit 233 are illustrated. A base station 232 for communicating wirelessly with the mobile unit 233 is installed on the roof of the building 231. It is assumed that the base station 232 and the mobile unit 233 correspond respectively to the transmitting device and the receiving device illustrated in FIG. 16. Also, the mobile unit 233 is assumed to have four antennas, though only one antenna is illustrated in FIG. 18.

If the mobile unit 233 approaches the building 231 to such an extent that the base station 232 and the mobile unit 233 are situated in a non-line-of-sight environment as illustrated in FIG. 18, radio waves (diffracted waves) arriving from one direction become dominant. In such a non-line-of-sight environment, it is difficult to transmit information in parallel.

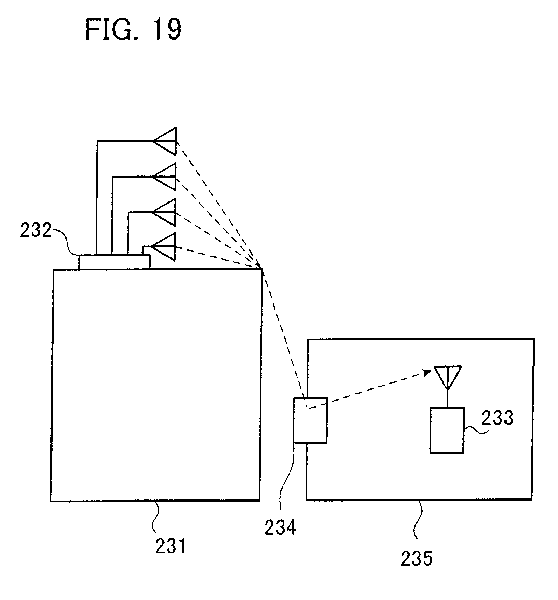

FIG. 19 is a second diagram exemplifying a non-line-of-sight environment. In FIG. 19, like reference numerals are used to denote like elements also appearing in FIG. 18, and description of such elements is omitted.

In the example illustrated in FIG. 19, the mobile unit 233 exists in a room 235. In this case, the radio waves from the base station 232 arrive at the mobile unit 233 through a window 234, as illustrated in FIG. 19. Such a non-line-of-sight environment makes it difficult to transmit information in parallel.

### Citation List

### Patent Literature

Patent Literature 1: Japanese Laid-open Patent Publication No. 2006-246176
Patent Literature 2: Japanese Laid-open Patent Publication No. 2005-311902

### Summary of Invention

### Technical Problem

Where the transmitting device and the receiving device are situated in a non-line-of-sight environment as stated above, a problem arises in that it is difficult to transmit information in parallel.

The present invention was created in view of the above circumstances, and an object thereof is to provide a wireless communication device which enables parallel transmission of information even in cases where the wireless communication device of data transmitting side and the wireless communication device of data receiving side are situated in a non-line-of-sight environment.

### Solution to Problem

To solve the above problems, there is provided a wireless communication device equipped with a plurality of antennas and configured to perform parallel communication of data. The wireless communication device includes a communication quality receiver configured to receive, from a receiving-side wireless communication device that has received the data, information about antenna communication quality of each of the plurality of antennas, and a transmission power controller configured to control transmission power of each of the plurality of antennas, in accordance with the antenna communication qualities received by the communication quality receiver.

Also, to solve the above problems, there is provided a wireless communication device equipped with a plurality of antennas and configured to perform parallel communication of data. The wireless communication device includes a communication quality calculator configured to calculate, based on a pilot signal included in the data received thereby, an antenna communication quality of each of a plurality of transmitting antennas of a transmitting-side wireless communication device that has transmitted the data, and a communication quality transmitter configured to transmit, to the transmitting-side wireless communication device, information about the antenna communication qualities calculated by the communication quality calculator.

Further, to solve the above problems, there is provided a wireless communication device equipped with a plurality of antennas and configured to perform parallel communication of data. The wireless communication device includes a communication quality receiver configured to receive, from a receiving-side wireless communication device that has received the data, information about communication qualities of communication channels between the wireless communication device and the receiving-side wireless communication device, a communication quality calculator configured to calculate an antenna communication quality of each of the plurality of antennas, based on the communication qualities received by the communication quality receiver, and a transmission power controller configured to control transmission power of each of the plurality of antennas, in accordance with the antenna communication qualities calculated by the communication quality calculator.

### Advantageous Effects of Invention

With the wireless communication device disclosed herein, information can be transmitted in parallel even in cases where the wireless communication devices of data transmitting and receiving sides are situated in a non-line-of-sight environment.

The above and other objects, features and advantages of the present invention will become apparent from the following description when taken in conjunction with the accompanying drawings which illustrate preferred embodiments of the present invention by way of example.

### Brief Description of Drawings

FIG. 1 illustrates a wireless communication system according to a first embodiment.
FIG. 2 illustrates a wireless communication system according to a second embodiment.
FIG. 3 is a block diagram of a wireless communication device.
FIG. 4 is a block diagram of a wireless communication device.
FIG. 5 illustrates the manner of how CQIs of individual antennas are measured.
FIG. 6 illustrates resource grids.
FIG. 7 is a block diagram illustrating details of a transmission power controller appearing in FIG. 3.
FIG. 8 illustrates the manner of how the CQIs are averaged.
FIG. 9 is a block diagram illustrating in detail an antenna communication quality factor calculator and an antenna transmission power calculator, both appearing in FIG. 7.
FIG. 10 illustrates exemplary numerical values of the CQIs of the individual antennas and their averages.
FIG. 11 illustrates exemplary numerical values of RIs of the individual antennas and their averages.
FIG. 12 illustrates exemplary numerical values of antenna communication quality factors.
FIG. 13 illustrates exemplary numerical values of power control values.
FIG. 14 illustrates electric power control for the individual antennas.
FIG. 15 is a flowchart illustrating a flow of processes executed in the wireless communication devices.
FIG. 16 illustrates a MIMO communication system.
FIG. 17 illustrates sizes of paths between a transmitting device and a receiving device.
FIG. 18 is a first diagram exemplifying a non-line-of-sight environment.
FIG. 19 is a second diagram exemplifying a non-line-of-sight environment.

### Description of Embodiments

A first embodiment will be described in detail below with reference to the drawing.

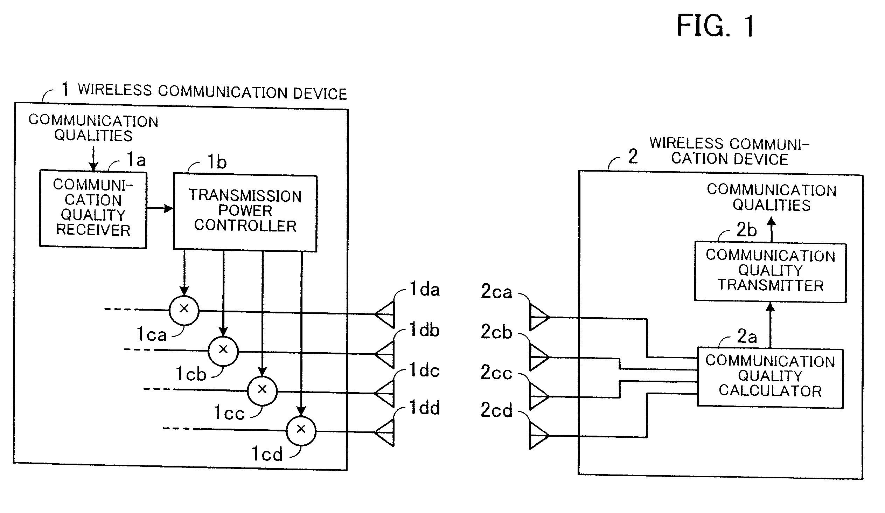

FIG. 1 illustrates a wireless communication system according to the first embodiment. As illustrated in FIG. 1, a wireless communication device 1 includes a communication quality receiver 1a, a transmission power controller 1b, multipliers 1ca to 1cd, and antennas 1da to 1dd. A wireless communication device 2 includes a communication quality calculator 2a, a communication quality transmitter 2b, and antennas 2ca to 2cd. In the example illustrated in FIG. 1, the wireless communication devices 1 and 2 perform MIMO communication by using 4 x 4 antennas, to transmit data from the wireless communication device 1 to the wireless communication device 2.

In the wireless communication device 1, the communication quality receiver 1a receives information about antenna communication qualities of the respective antennas 1da to 1dd from the wireless communication device 2 that has received the data.

Based on the antenna communication qualities received by the communication quality receiver 1a, the transmission power controller 1b controls transmission powers of the respective antennas 1da to 1dd. For example, if the antenna communication quality of the antenna 1 dd is low (poor), the transmission power controller 1 b controls the multiplier 1 cd so that the transmission power of the antenna 1 dd may be increased.

Under the control of the transmission power controller 1b, the multipliers 1ca to 1cd control the transmission powers of the respective antennas 1da to 1dd.

In the wireless communication device 2, the communication quality calculator 2a calculates, based on a pilot signal included in the data received by the antennas 2ca to 2cd, the antenna communication qualities of the respective antennas 1da to 1dd of the wireless communication device 1 that has transmitted the data.

The communication quality transmitter 2b transmits, to the wireless communication device 1, information about the antenna communication qualities of the respective antennas 1da to 1dd, calculated by the communication quality calculator 2a. For example, the communication quality transmitter 2b transmits the information about the antenna communication qualities of the respective antennas 1da to 1dd wirelessly from the antennas 2ca to 2cd to the wireless communication device 1. The aforementioned communication quality receiver 1a of the wireless communication device 1 receives, via the antennas 1 da to 1 dd, the information about the antenna communication qualities transmitted from the communication quality transmitter 2b.

In this manner, the wireless communication device 2 of data receiving side calculates the antenna communication qualities of the respective antennas 1da to 1dd of the wireless communication device 1 of data transmitting side, and transmits information about the calculated antenna communication qualities to the wireless communication device 1. Based on the antenna communication qualities of the respective antennas 1da to 1dd transmitted from the wireless communication device 2, the wireless communication device 1 controls the transmission powers of the respective antennas 1da to 1dd. Consequently, even if the wireless communication devices 1 and 2 are situated in a non-line-of-sight environment, information can be transmitted in parallel. It is also possible to enlarge an area wherein parallel transmission is available. Further, narrowing of the communication bandwidth can be suppressed.

A second embodiment will be now described in detail with reference to the drawings.

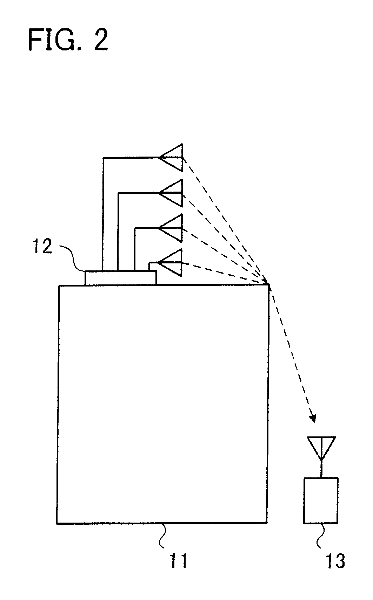

FIG. 2 illustrates a wireless communication system according to the second embodiment. Specifically, FIG. 2 illustrates a building 11, a wireless communication device 12 installed on the roof of the building 11, and a wireless communication device 13 which communicates wirelessly with the wireless communication device 12. The wireless communication device 12 is, for example, a base station, and the wireless communication device 13 is, for example, a mobile phone. The wireless communication devices 12 and 13 perform MIMO wireless communication in accordance with, for example, LTE (Long Term Evolution) wireless technology. The wireless communication device 13 actually has a plurality of antennas, though only one antenna is illustrated in FIG. 2. In the following, MIMO communication using 4 x 4 antennas will be explained, by way of example, wherein data is transmitted from the wireless communication device 12 and is received by the wireless communication device 13.

The data transmitted from the wireless communication device 12 includes information bits to be transmitted to the wireless communication device 13, and a pilot signal by means of which qualities of communication channels between the antennas of the wireless communication device 12 and those of the wireless communication device 13 are calculated. Based on the pilot signal included in the data received from the wireless communication device 12, the wireless communication device 13 calculates the respective communication qualities of the communication channels between the wireless communication devices 12 and 13.

The communication qualities calculated by the wireless communication device 13 include parameters on the basis of which the wireless communication devices 12 and 13 calculate a communication channel response matrix H. Also, the communication qualities calculated by the wireless communication device 13 include antenna communication qualities indicative of the communication qualities of the respective antennas of the wireless communication device 12. Since the wireless communication device 12 is equipped with four antennas, the wireless communication device 13 calculates the antenna communication qualities of the four antennas of the wireless communication device 12. The wireless communication device 13 wirelessly communicates with the wireless communication device 12 to feed back the calculated communication qualities.

Based on the parameters included in the received communication qualities, the wireless communication device 12 calculates the communication channel response matrix H. Also, based on the antenna communication qualities included in the received communication qualities, the wireless communication device 12 controls the transmission powers of the respective antennas. For example, the wireless communication device 12 increases the transmission power of an antenna of which the antenna communication quality is low.

In this manner, the wireless communication device 13, which receives data from the wireless communication device 12, calculates the antenna communication qualities of the respective antennas of the wireless communication device 12 on the basis of the pilot signal, and feeds back the calculated antenna communication qualities to the wireless communication device 12. Based on the antenna communication qualities received from the wireless communication device 13, the wireless communication device 12 controls the transmission powers of the respective antennas. Consequently, even if a certain antenna of the wireless communication device 12 is low in antenna communication quality, data transmitted from such an antenna can be made to reach the wireless communication device 13, whereby information can be transmitted in parallel even while the wireless communication devices 12 and 13 are situated in a non-line-of-sight environment.

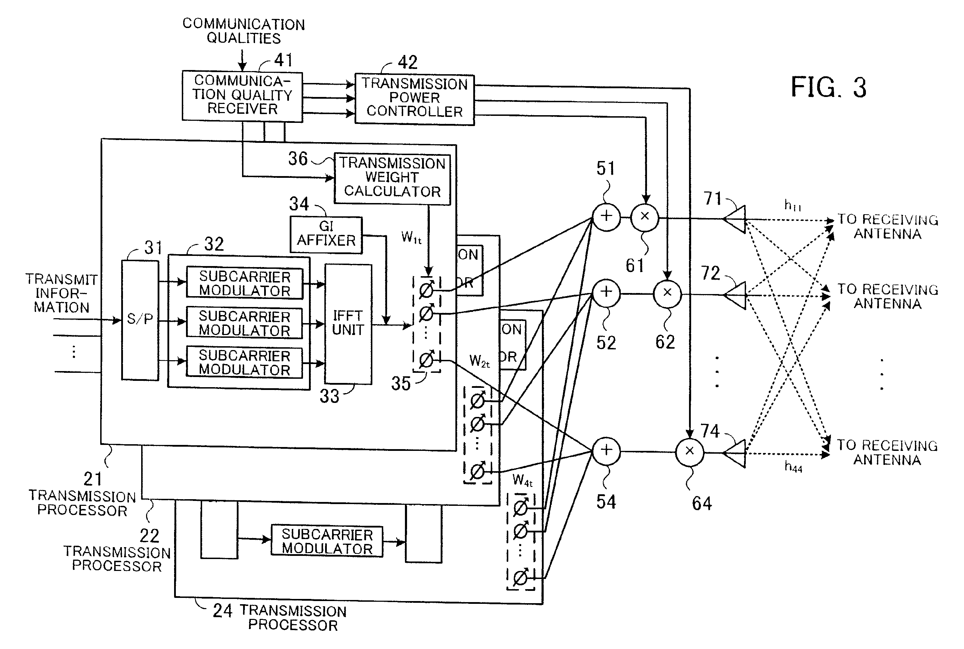

FIG. 3 is a block diagram of the wireless communication device. Specifically, FIG. 3 illustrates blocks of the wireless communication device 12 of the data transmitting side, appearing in FIG. 2. As illustrated in FIG. 3, the wireless communication device 12 includes transmission processors 21, 22, ..., 24, a communication quality receiver 41, a transmission power controller 42, adders 51, 52, ..., 54, multipliers 61, 62, ..., 64, and antennas 71, 72, ..., 74. The transmission processors 21, 22, ..., 24, the adders 51, 52, ..., 54, the multipliers 61, 62, ..., 64 and the antennas 71, 72, ..., 74 illustrated in FIG. 3 are individually three in number, but in practice four elements are provided each, because the wireless communication devices 12 and 13 perform MIMO communication by using 4x4 antennas.

The transmission processors 21, 22, ..., 24 are input with transmit information (transmit data) to be transmitted to the wireless communication device 13. Since the wireless communication devices 12 and 13 perform MIMO communication by using 4x4 antennas, the transmit information is divided into four parallel data items to be input to the transmission processors 21, 22, ..., 24. The transmit information includes the pilot signal by means of which the wireless communication device 13 measures the communication qualities.

The transmission processor 21 includes a serial-parallel converter (hereinafter S/P) 31, a subcarrier modulator 32, an IFFT (Inverse Fast Fourier Transform) unit 33, a GI (Guard Interval) affixer 34, a transmission weight processor 35, and a transmission weight calculator 36. The S/P 31, the subcarrier modulator 32, the IFFT unit 33 and the GI affixer 34 carry out an OFDM (Orthogonal Frequency Division Multiplexing) modulation process.

The S/P 31 subjects the transmit information to serial-parallel conversion and outputs the result to the subcarrier modulator 32. The subcarrier modulator 32 subjects the transmit information that has undergone the serial-parallel conversion, to subcarrier modulation and outputs the result to the IFFT unit 33. The IFFT unit 33 converts the frequency-domain transmit information obtained by the subcarrier modulation, to a time-domain signal. The GI affixer 34 affixes a guard interval to the time-domain signal output from the IFFT unit 33. The transmission weight processor 35 multiplies the signal output from the IFFT unit 33, by a transmission weight W₁ₜ calculated by the transmission weight calculator 36, and outputs the result to the adders 51, 52, ..., 54. The transmission weight calculator 36 calculates the communication channel response matrix H on the basis of the parameters included in the communication qualities received by the communication quality receiver 41, and calculates the eigenvalues and eigenvectors of the communication channel matrix H, to obtain the transmission weight W₁ₜ which is in 1 x 4 matrix form. Each of the transmission processors 22, ..., 24 also includes blocks identical with those of the transmission processor 21 described above, and description of the other transmission processors is omitted.

The communication quality receiver 41 receives, from the wireless communication device 13, information about the communication qualities of communication channels between the antennas 71, 72, ..., 74 and the four antennas of the wireless communication device 13. Then, the communication quality receiver 41 outputs the parameters included in the received information about the communication qualities, to the transmission weight calculator 36 of the transmission processor 21 as well as to the transmission weight calculators of the transmission processor 22, ..., 24. Also, the communication quality receiver 41 outputs the antenna communication qualities included in the received information about the communication qualities, to the transmission power controller 42.

The transmission power controller 42 controls the multipliers 61, 62, ..., 64 in accordance with the antenna communication qualities output from the communication quality receiver 41, to control the transmission powers of signals output from the respective antennas 71, 72, ..., 74. If the antenna communication quality of the antenna 74, for example, is lower than those of the other antennas, the transmission power controller 42 controls the multiplier 64 so as to increase the transmission power of the antenna 74.

The adders 51, 52, ..., 54 are each input with signals which have been multiplied by the transmission weights Wᵢₜ, W₂ₜ, ..., W₄ₜ in the respective transmission processors 21, 22, ..., 24. Each of the adders 51, 52, ..., 54 adds up the signals output from the respective transmission processors 21, 22, ..., 24, and outputs the result to a corresponding one of the multipliers 61, 62, ..., 64.

Under the control of the transmission power controller 42, the multipliers 61, 62, ..., 64 amplify the signals output from the respective adders 51, 52, ..., 54. The amplified signals are output to the antennas 71, 72,.... 74, respectively, and transmitted over the air to the wireless communication device 13.

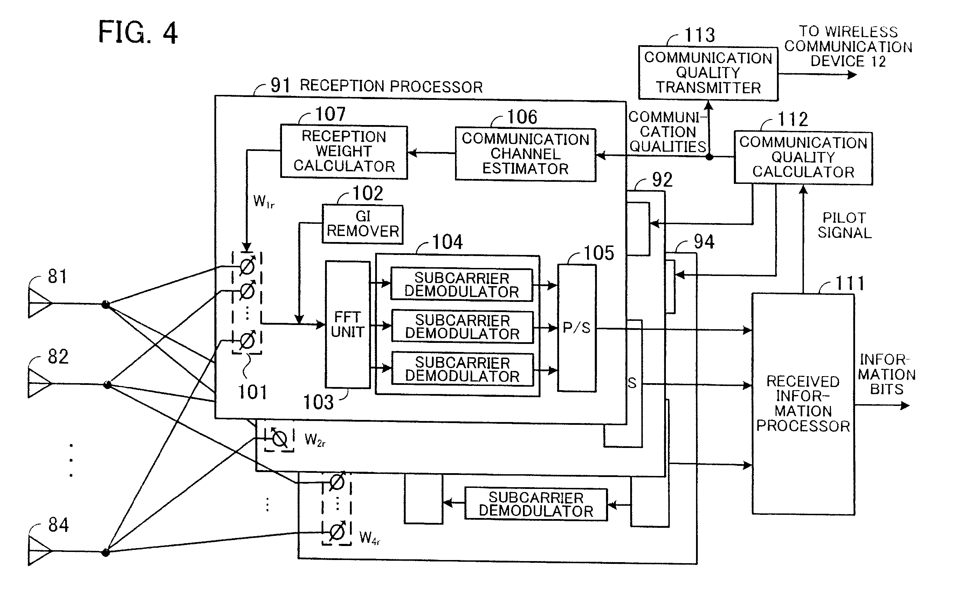

FIG. 4 is a block diagram of the wireless communication device. Specifically, FIG. 4 illustrates blocks of the wireless communication device 13 of the data receiving side, appearing in FIG. 2. As illustrated in FIG. 4, the wireless communication device 13 includes antennas 81, 82, ..., 84, reception processors 91, 92, ..., 94, a received information processor 111, a communication quality calculator 112, and a communication quality transmitter 113. The antennas 81, 82, ..., 84 and the reception processors 91, 92, ..., 94 illustrated in FIG. 4 are individually three in number, but in practice four elements are provided each, because the wireless communication devices 12 and 13 perform MIMO communication by using 4x4 antennas.

The reception processor 91 includes a reception weight processor 101, a GI remover 102, an FFT (Fast Fourier Transform) unit 103, a subcarrier demodulator 104, a parallel-serial converter (hereinafter P/S) 105, a communication channel estimator 106, and a reception weight calculator 107. The FFT unit 103, the subcarrier demodulator 104 and the P/S 105 carry out an OFDM demodulation process.

Signals received by the antennas 81, 82, ..., 84 are output to the reception weight processor 101 of the reception processor 91 as well as to the reception weight processors of the reception processors 92, ..., 94. The reception weight processor 101 multiplies the signals received via the respective antennas 81, 82, ..., 84 by a reception weight W₁ᵣ calculated by the reception weight calculator 107, and outputs the result to the FFT unit 103. The GI remover 102 removes the GI from the signal output from the reception weight processor 101 and being supplied to the FFT unit 103. The FFT unit 103 converts the time-domain signal from which the GI has been removed, to frequency-domain signals and outputs the resulting signals to the subcarrier demodulator 104. The subcarrier demodulator 104 subjects the frequency-domain signals obtained by the conversion at the FFT unit 103, to subcarrier demodulation. The P/S 105 subjects the demodulated signals obtained by the subcarrier demodulation, to parallel-serial conversion and outputs the received information to the received information processor 111. The communication channel estimator 106 calculates the communication channel response matrix H on the basis of the parameters included in the information about communication qualities output from the communication quality calculator 112. Based on the communication channel response matrix H calculated by the communication channel estimator 106, the reception weight calculator 107 calculates the reception weight W₁ᵣ which is in 1 x 4 matrix form.

The received information processor 111 extracts the information bits transmitted from the wireless communication device 12, from the received information output from the P/S 105 of the reception processor 91 as well as from the P/S's of the reception processors 92, ..., 94. Also, the received information processor 111 extracts the pilot signal from the received information output from the P/S 105 of the reception processor 91 as well as from the P/S's of the reception processors 92, ..., 94. The extracted pilot signal is output to the communication quality calculator 112.

Based on the pilot signal extracted by the received information processor 111, the communication quality calculator 112 calculates the communication qualities of the communication channels between the antennas 71, 72, ..., 74 of the wireless communication device 12 and the antennas 81, 82, ..., 84 of the wireless communication device 13. The calculated communication qualities are output to the communication channel estimator 106 of the reception processor 91 as well as to the communication channel estimators of the reception processors 92, ..., 94. Also, the calculated communication qualities are output to the communication quality transmitter 113.

As previously mentioned, the communication qualities include the parameters used for calculating the communication channel response matrix H, and the antenna communication qualities of the respective antennas 71, 72, ..., 74 of the wireless communication device 12. The antenna communication qualities are each the sum of CQIs (Channel Quality Indication) of the communication channels between a corresponding one of the antennas 71, 72, ..., 74 of the wireless communication device 12 of the data transmitting side and the antennas 81, 82, ..., 84 of the wireless communication device 13. For example, in the case of the antenna 71 of the wireless communication device 12, there are four communication channels leading to the respective antennas 81, 82, ..., 84 of the wireless communication device 13. In this case, the sum of the CQIs of the four communication channels represents the antenna communication quality of the antenna 71 of the wireless communication device 12. Also, there are four communication channels between the antenna 72 of the wireless communication device 12 and the respective antennas 81, 82, ..., 84 of the wireless communication device 13, and in this case, the sum of the CQIs of the four communication channels represents the antenna communication quality of the antenna 72 of the wireless communication device 12. Likewise, there are four communication channels between the antenna 74 of the wireless communication device 12 and the respective antennas 81, 82, ..., 84 of the wireless communication device 13, and in this case, the sum of the CQIs of the four communication channels represents the antenna communication quality of the antenna 74 of the wireless communication device 12. That is to say, the communication quality calculator 112 calculates the CQIs of the communication channels between each of the multiple antennas 71, 72, ..., 74 of the wireless communication device 12 and the multiple antennas 81, 82, ..., 84 of the wireless communication device 13, and adds up the calculated CQIs to obtain a sum as representative of the antenna communication quality of the corresponding one of the antennas 71, 72, ..., 74.

The antenna communication quality may include RI (Rank Indication). The RI is information indicative of the size of parallel communication between the wireless communication devices 12 and 13, and indicates, for example, whether the ongoing data communication is fourfold parallel communication or threefold parallel communication. The RI can be derived from the pilot signal. In the following description, the antenna communication qualities are assumed to include the CQIs of the antennas 71, 72, ..., 74 and the RI. For example, the antenna communication quality of the antenna 71 of the wireless communication device 12 includes the sum of CQIs of the communication channels between the antenna 71 and the respective antennas 81, 82, ..., 84 of the wireless communication device 13, as well as the RI. Similarly, the antenna communication quality of the antenna 72 of the wireless communication device 12 includes the sum of CQIs of the communication channels between the antenna 72 and the respective antennas 81, 82, ..., 84 of the wireless communication device 13, as well as the RI.

The communication quality transmitter 113 transmits information about the communication qualities calculated by the communication quality calculator 112, over the air to the wireless communication device 12. Namely, the communication quality transmitter 113 feeds back the calculated communication qualities to the wireless communication device 12. The communication qualities are fed back from the communication quality transmitter 113 to the wireless communication device 12 via the antennas 81, 82, ..., 84, for example. At the wireless communication device 12, the communication quality receiver 41 receives the communication quality information via the antennas 71, 72, ..., 74.

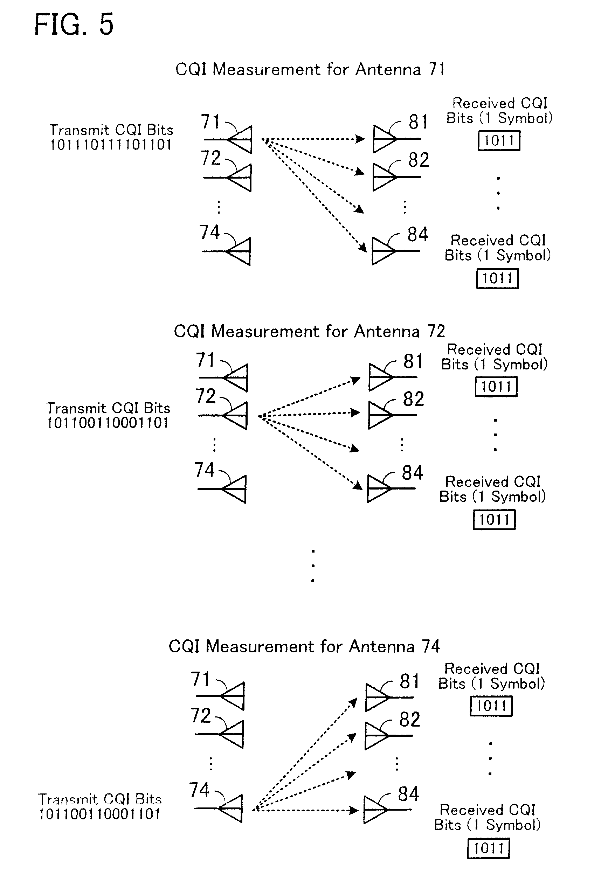

FIG. 5 illustrates the manner of how the CQIs of the individual antennas are measured. In FIG. 5, the antennas 71, 72, ..., 74 of the wireless communication device 12 and the antennas 81, 82, ..., 84 of the wireless communication device 13 are illustrated.

As illustrated in FIG. 5, the pilot signal including transmit CQI bits is transmitted from each of the antennas 71, 72, ..., 74. The transmitted pilot signal is received by the antennas 81, 82, ..., 84.

The pilot signal received by the antennas 81, 82, ..., 84 is extracted by the received information processor 111. Using the pilot signal extracted by the received information processor 111, the communication quality calculator 112 extracts one symbol of the CQI bits transmitted from the antenna 71 and received by each of the antennas 81, 82, ..., 84. Then, based on the received CQI bits thus extracted, the communication quality calculator 112 calculates the CQI of each of the communication channels between the antenna 71 and the respective antennas 81, 82, ..., 84, and adds up the CQIs to obtain a sum as representative of the CQI of the antenna 71. The communication quality calculator 112 outputs the calculated CQI and the RI between the wireless communication devices 12 and 13 as the antenna communication quality of the antenna 71.

Similarly, using the pilot signal extracted by the received information processor 111, the communication quality calculator 112 extracts one symbol of the CQI bits transmitted from the antenna 72 and received by each of the antennas 81, 82, ..., 84. Then, based on the received CQI bits thus extracted, the communication quality calculator 112 calculates the CC21 of each of the communication channels between the antenna 72 and the respective antennas 81, 82, ..., 84, and adds up the CQIs to obtain a sum as representative of the CQI of the antenna 72. The communication quality calculator 112 outputs the calculated CQI and the RI between the wireless communication devices 12 and 13 as the antenna communication quality of the antenna 72.

The communication quality calculator 112 calculates the antenna communication quality in like manner up to the antenna 74, whereby the antenna communication qualities of the respective antennas 71, 72, ..., 74 are obtained.

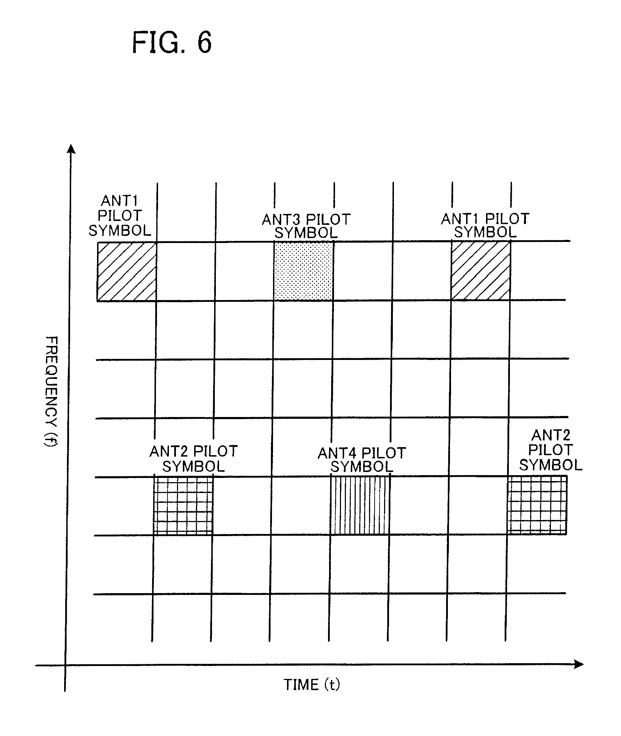

FIG. 6 illustrates resource grids. The transmit information to be transmitted from the wireless communication device 12 is allocated to the resource grids illustrated in FIG. 6, and transmitted at a time from the antennas 71, 72, ..., 74 of the wireless communication device 12. Namely, the transmit information is transmitted wirelessly from the four antennas 71, 72, ..., 74 to the wireless communication device 13 by means of four resource grids.

In the wireless communication device 13, the received information processor 111 receives the receive information as four resource grids. Based on ANT1 through ANT4 pilot symbols of the received four resource grids, the received information processor 111 determines which of the antennas 71, 72, ..., 74 has transmitted which of the received four resource grids.

For example, if a predetermined symbol has been assigned to the grid of the ANT1 pilot symbol illustrated in FIG. 6, the received information processor 111 recognizes that the received resource grid (receive information) has been transmitted from the antenna 71. Also, if a predetermined symbol has been assigned to the grid of the ANT2 pilot symbol illustrated in FIG. 6, for example, the received information processor 111 recognizes that the received resource grid has been transmitted from the antenna 72.

Thus, the received information processor 111 can identify that one of the antennas 71, 72, ..., 74 from which the pilot signal included in the received information has been transmitted. Accordingly, based on the pilot signal extracted by the received information processor 111 and the information indicating which of the antennas 71, 72, ..., 74 has transmitted the pilot signal, the communication quality calculator 112 can calculate the antenna communication qualities of the respective antennas 71, 72, ..., 74 of the wireless communication device 12.

The data assigned to the ANT1 to ANT4 pilot symbols illustrated in FIG. 6 is included in the transmit information input to the transmission processors 21, 22, ..., 24. Also, the data assigned to the ANT1 to ANT4 pilot symbols is allocated to the resource grids by the subcarrier modulator 32 of the transmission processor 21 and the subcarrier modulators of the transmission processors 22, ..., 24. The ANT1 to ANT4 pilot symbols illustrated in FIG. 6 just serve to indicate from which of the antennas 71, 72, ..., 74 the resource grid has been transmitted, and differ from the pilot signal. That is, the information bits and the pilot signal to be transmitted from the wireless communication device 12 are allocated to grids separate from those for the ANT1 to ANT4 pilot symbols illustrated in FIG. 6.

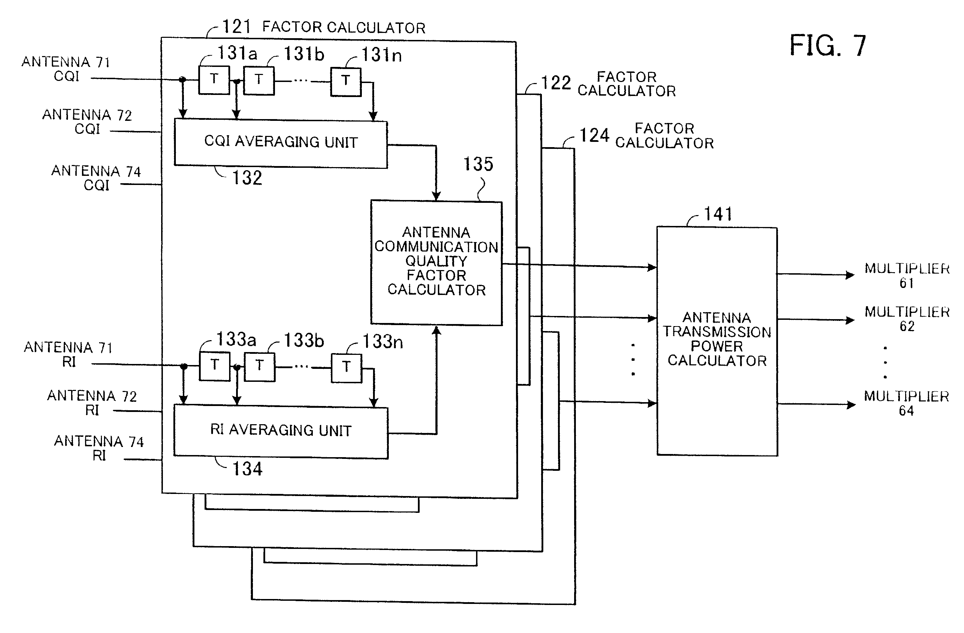

FIG. 7 is a block diagram illustrating details of the transmission power controller appearing in FIG. 3. As illustrated in FIG. 7, the transmission power controller 42 of the wireless communication device 12 includes factor calculators 121, 122, ..., 124 and an antenna transmission power calculator 141. The factor calculators 121, 122, ..., 124 illustrated in FIG. 7 are three in number, but in practice four elements are provided since MIMO communication using 4 x 4 antennas is carried out.

The factor calculator 121 includes delay units (in FIG. 7, indicated at T) 131 a to 131 and 133a to 133n, a CQI averaging unit 132, an RI averaging unit 134, and an antenna communication quality factor calculator 135. Like the factor calculator 121, each of the factor calculators 122, ..., 124 includes delay units, a CQI averaging unit, an RI averaging unit, and an antenna communication quality factor calculator.

The delay units 131 a to 131 n are input with the CQI of the antenna 71, included in the communication qualities received by the communication quality receiver 41. Likewise, the corresponding delay units of the factor calculators 122, ..., 124 are input with the CQIs of the respective antennas 72, ..., 74.

The CQI is input to the CQI averaging unit 132 while being successively delayed by the delay units 131 a to 131 n. The delay units 131 a to 131 n are connected in series so that the delay units 131b, ..., 131n of latter stages may hold older CQIs to be output to the CQI averaging unit 132. For example, the delay unit 131a outputs the CQI, which is one symbol earlier than the present CQI, to the CQI averaging unit 132, and the delay unit 131 b outputs the CQI, which is two symbols earlier than the present CQI, to the CQI averaging unit 132.

The CQI averaging unit 132 calculates an average value from the CQI of the antenna 71, output from the communication quality receiver 41, and the past CQIs output from the delay units 131 a to 131 n. The CQI averaging unit 132 outputs the calculated average value of the CQIs to the antenna communication quality factor calculator 135.

The delay units 133a to 133n are input with the RI of the antenna 71, included in the communication qualities received by the communication quality receiver 41. Similarly, the corresponding delay units of the factor calculators 122, ..., 124 are input with the RIs of the respective antennas 72, ..., 74.

The RI is input to the RI averaging unit 134 while being successively delayed by the delay units 133a to 133n. The delay units 133a to 133n are connected in series so that the delay units 133b, ..., 133n of latter stages may hold older RIs to be output to the RI averaging unit 134. For example, the delay unit 133a outputs the RI, which is one symbol earlier than the present RI, to the RI averaging unit 134, and the delay unit 133b outputs the RI, which is two symbols earlier than the present RI, to the RI averaging unit 134.

The RI averaging unit 134 calculates an average value from the RI of the antenna 71, output from the communication quality receiver 41, and the past RIs output from the delay units 133a to 133n. The RI averaging unit 134 outputs the calculated average value of the RIs to the antenna communication quality factor calculator 135.

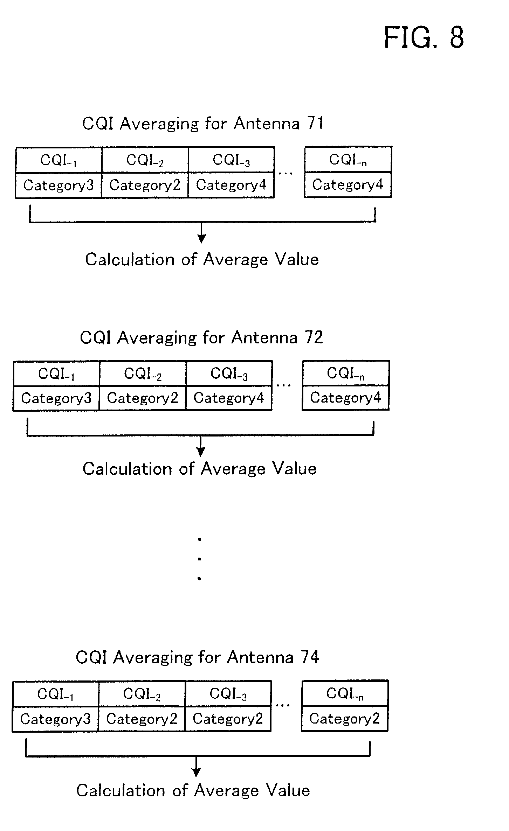

FIG. 8 illustrates the averaging of the CQIs. In FIG. 8, "Category X" represents the category of the corresponding CQI. Namely, FIG. 8 illustrates an exemplary case where the communication quality transmitter 113 of the wireless communication device 13 feeds back categories, and not numerical values, as the CQIs. The CQI averaging unit 132 can obtain numerical values corresponding to the CQI categories by looking up a table, for example.

In FIG. 8, the expression "CQL," under the legend "CQI Averaging for Antenna 71" indicates the CQI of the antenna 71 which is one symbol earlier than the present CQI and output from the communication quality receiver 41, "CQI₋₂" indicates the CQI which is two symbols earlier than the present CQI and output from the delay unit 131a, and "CQI₋ₙ" indicates the CQI which is n symbols earlier than the present CQI and output from the delay unit 131 n. Likewise, the expression "CQL₁" under the legend "CQI Averaging for Antenna 74" indicates the CQI of the antenna 74 which is one symbol earlier than the present CQI and output from the communication quality receiver 41, "CQI₋₂" indicates the CQI which is two symbols earlier than the present CQI and output from the first-stage delay unit of the factor calculator 124, and "CQI-ₙ" indicates the CQI which is n symbols earlier than the present CQI and output from the nth-stage delay unit.

The CQI averaging unit 132 calculates an average value of the CQL₁ to CQI₋ₙ to obtain an average value of the CQIs of the antenna 71. Similarly, the CQI averaging units of the factor calculators 122, ..., 124 calculate respective average values of the CQL₋₁ to CQI₋ₙ to obtain average values of the CQIs of the respective antennas 72, ..., 74. Average values of the RIs are also calculated in like manner.

By thus calculating the average values of the antenna communication qualities of the respective antennas 71, 72, ..., 74, it is possible to appropriately control the transmission powers. For example, even if the antenna communication quality of a certain one of the antennas 71, 72, ..., 74 suddenly rises due to noise, the influence of such noise on the transmission power control can be reduced since the transmission powers are controlled using the average values of the antenna communication qualities.

Referring again to FIG. 7, the antenna communication quality factor calculator 135 calculates a factor for controlling the transmission power of the signal transmitted from the antenna 71, on the basis of the average value of the CQIs of the antenna 71 and the average value of the RIs. Likewise, the antenna communication quality factor calculators of the factor calculators 122, ..., 124 calculate factors for controlling the transmission powers of signals transmitted from the respective antennas 72, ..., 74, on the basis of the average values of the CQIs of the respective antennas 72, ..., 74 and the average values of the RIs.

The antenna transmission power calculator 141 controls the multipliers 61, 62, ..., 64 in accordance with the factors calculated by the respective factor calculators 121, 122, ..., 124, to control the amplification of the transmission powers of the signals transmitted from the respective antennas 71, 72, ..., 74. For example, the antenna transmission power calculator 141 controls the multipliers 61, 62, ..., 64 so that the smaller the factors calculated by the factor calculators 121, 122, ..., 124, that is, the lower the antenna communication qualities of the antennas 71, 72, ..., 74, the higher transmission power may be assigned.

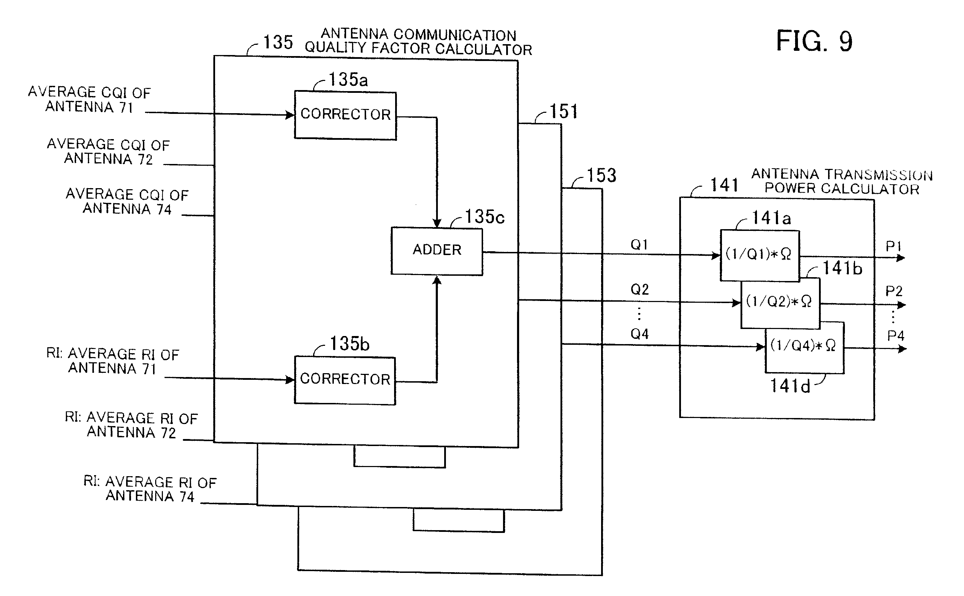

FIG. 9 is a block diagram illustrating in detail the antenna communication quality factor calculator and the antenna transmission power calculator, both appearing in FIG. 7. Specifically, FIG. 9 illustrates the antenna communication quality factor calculator 135 of the factor calculator 121 illustrated in FIG. 7, antenna communication quality factor calculators 151, ..., 153 of the factor calculators 122, ..., 124, and the antenna transmission power calculator 141.

The antenna communication quality factor calculator 135 is input with the average CQI of the antenna 71 and the average RI. Similarly, the antenna communication quality factor calculators 151, ..., 153 are input with the average CQIs of the respective antennas 72, ..., 74 and the average RIs.

The antenna communication quality factor calculator 135 includes correctors 135a and 135b, and an adder 135c. The correctors 135a and 135b multiply the CQI and the RI respectively input thereto by respective correction values, since the influence exerted by the CQI on the electric power control differs from that exerted by the RI on the electric power control. For example, the corrector 135a multiplies the input average CQI of the antenna 71 by a correction value α, and the corrector 135b multiplies the input average RI of the antenna 71 by a correction value β.

The adder 135c adds together the average CQI of the antenna 71, corrected by the corrector 135a, and the average RI of the antenna 71, corrected by the corrector 135b. Further, the adder 135c adds a correction value y to the obtained sum so that the sum may be adjusted to a suitable value for the electric power control, and outputs an antenna communication quality factor Q1 obtained as a result, to the antenna transmission power calculator 141.

The antenna communication quality factor calculators 151, ..., 153 also calculate antenna communication quality factors Q2, ..., Q4, respectively, in the same manner as the antenna communication quality factor calculator 135.

The antenna transmission power calculator 141 includes power ratio calculators 141a, 141b, ..., 141d. The power ratio calculators 141a, 141b, ..., 141d are input with the antenna communication quality factors Q1, Q2, ..., Q4 calculated by the respective antenna communication quality factor calculators 135, 151, ..., 153.

The power ratio calculators (in FIG. 9, indicated by (1/Qn)^{*}Ω) 141 a, 141 b, ..., 141 d output, to the respective multipliers 61, 62, ..., 64, power control values P1, P2, ..., P4 obtained by multiplying the reciprocals of the respective antenna communication quality factors Q1, Q2, ..., Q4 by a correction value Ω. The correction value Ω is used for correction so that the powers of transmit signals may be controlled to appropriate values by the respective multipliers 61, 62, ..., 64. Consequently, if a certain antenna communication quality factor is small, the corresponding power control value is increased, so that the power of the transmit signal transmitted from the corresponding antenna is increased.

In the following, the calculation of the power control values and the transmission power control for the antennas 71, 72, ..., 74 will be explained with reference to concrete numerical values.

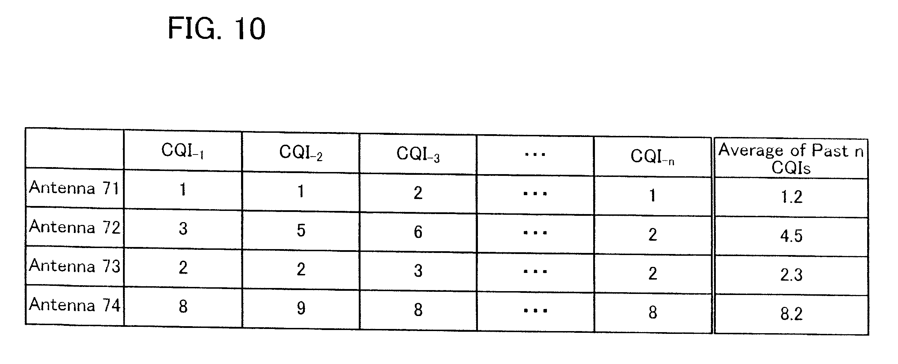

FIG. 10 indicates exemplary numerical values of the CQIs of the respective antennas and their averages. Specifically, FIG. 10 indicates the CQL₋₁ to CQt₋ₙ of the individual antennas 71, 72, ..., 74 and the averages of the respective past n CQIs. For example, the average CQI of the antenna 71 is "1.2" as illustrated in FIG. 10.

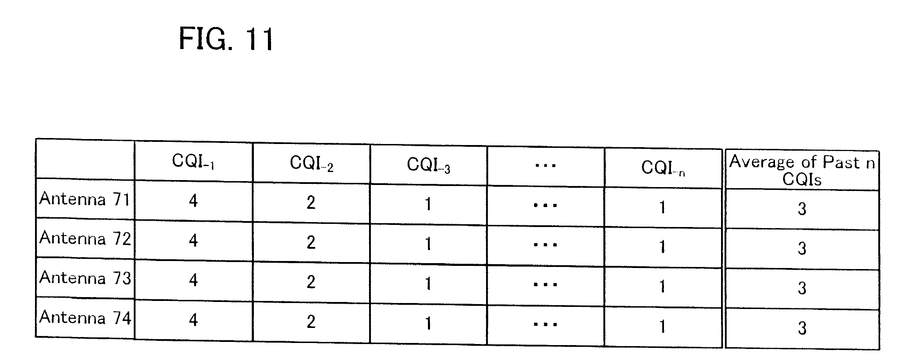

FIG. 11 indicates exemplary numerical values of the RIs of the respective antennas and their averages. Specifically, FIG. 11 indicates RL₋₁, which is the RI one symbol earlier than the present RI, through RL₋ₙ, which is the RI n symbols earlier than the present RI, of the individual antennas 71, 72, ..., 74 and the averages of the respective past n RIs. As illustrated in FIG. 11, the RIs of the antennas 71, 72, ..., 74 assume the same value.

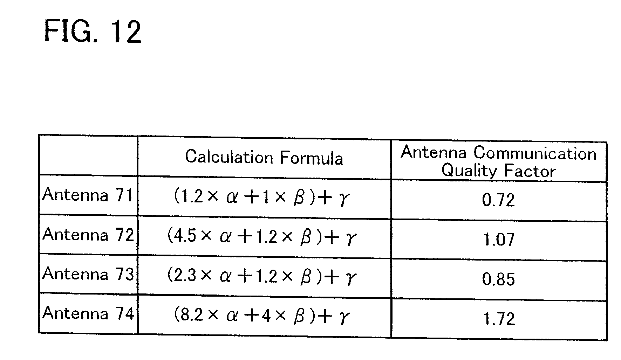

FIG. 12 indicates exemplary numerical values of the antenna communication quality factors. Using the average values of the CQIs and the average values of the RIs, the antenna communication quality factor calculators 135, 151, ..., 153 calculate the respective antenna communication quality factors according to a calculation formula indicated in FIG. 12. FIG. 12 illustrates an exemplary case where the antenna communication quality factors are calculated using the average CQI and RI values illustrated in FIGS. 10 and 11, where the correction values α, β and y are set as: α = 0.1, β = 0.1, and y = 0.5. For example, the antenna communication quality factor of the antenna 71 is "0.72" as illustrated in FIG. 12.

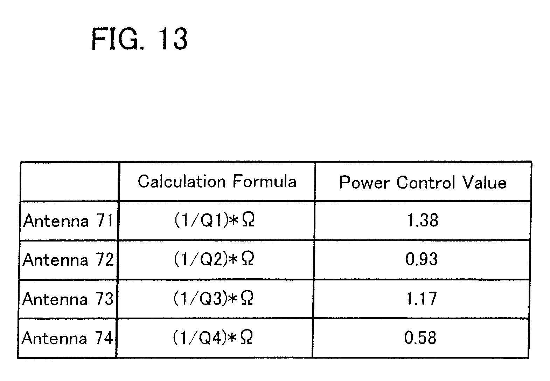

FIG. 13 indicates exemplary numerical values of the power control values. The power ratio calculators 141a, 141b, ..., 141d of the antenna transmission power calculator 141 calculate the power control values of the respective antennas 71, 72, ..., 74 according to a calculation formula indicated in FIG. 13. In FIG. 13, Q1 to Q4 represent the antenna communication quality factors of the respective antennas 71, 72, ..., 74 illustrated in FIG. 12. In the example illustrated in FIG. 13, the power control values are calculated with the correction value Ω set as: Ω = 1.

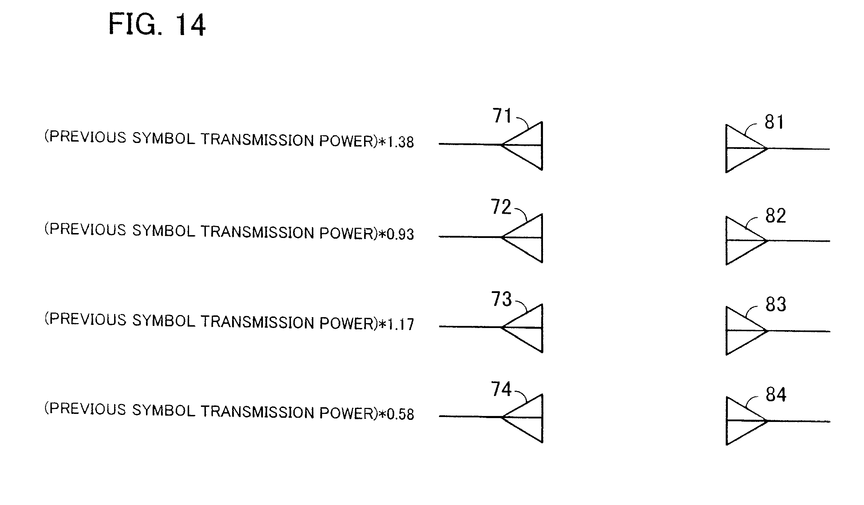

FIG. 14 illustrates the electric power control for the antennas. Specifically, FIG. 14 illustrates the antennas 71, 72, ..., 74 of the wireless communication device 12 and the antennas 81, 82, ..., 84 of the wireless communication device 13. The power control values calculated by the power ratio calculators 141a, 141 b, ..., 141d are output to the respective multipliers 61, 62, ..., 64 of the wireless communication device 12. The multipliers 61, 62, ..., 64 multiply the respective transmission powers of the previous symbol by the power control values (ratios to the previous electric power values) respectively calculated by the power ratio calculators 141a, 141b, ..., 141d. In the case of the antenna 71, for example, the previous symbol transmission power is multiplied by the power control value "1.38". In this manner, the transmission powers of the respective antennas 71, 72, ..., 74 are controlled.

The following describes the flow of processes executed in the wireless communication devices.

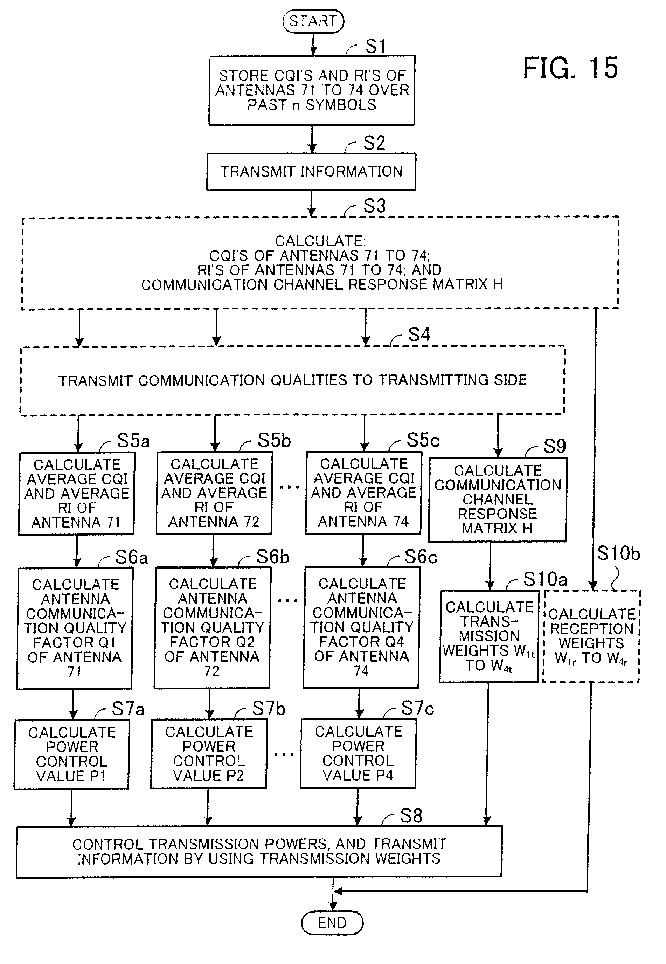

FIG. 15 is a flowchart illustrating the flow of processes executed in the wireless communication devices, wherein solid-line rectangles indicate the processes of the wireless communication device 12 of the data transmitting side, and dashed-line rectangles indicate the processes of the wireless communication device 13 of the data receiving side.

In Step S1, the wireless communication device 12 stores the CQIs and RIs of the individual antennas 71, 72, ..., 74 for past n symbols.

In Step S2, the wireless communication device 12 sends transmit information including information bits and the pilot signal to the wireless communication device 13.

In Step S3, the wireless communication device 13 calculates the communication qualities of the communication channels between the wireless communication devices 12 and 13, on the basis of the pilot signal included in the received transmit information, and then calculates the CQIs and RIs of the respective antennas 71, 72, ..., 74 as well as the communication channel response matrix H.

In Step S4, the wireless communication device 13 transmits information about the communication qualities wirelessly to the transmitting-side wireless communication device 12.

In Steps S5a to S5c, the wireless communication device 12 calculates the average CQIs and average RIs of the individual antennas 71, 72, ..., 74 on the basis of the received communication qualities.

In Steps S6a to S6c, the wireless communication device 12 calculates the antenna communication quality factors Q1, Q2, ..., Q4 of the respective antennas 71, 72, ..., 74, on the basis of the average CQIs and the average RIs.

In Steps S7a to S7c, based on the antenna communication quality factors Q1, Q2, .., Q4, the wireless communication device 12 calculates the power control values P1, P2, ..., P4 of the respective antennas 71, 72, ..., 74.

In Step S8, the wireless communication device 12 controls the transmission powers of the respective antennas 71, 72, ..., 74 in accordance with the corresponding power control values P1, P2, ..., P4. Also, using the transmission weights W₁ₜ to W₄ₜ, the wireless communication device 12 sends transmit information including information bits and the pilot signal to the wireless communication device 13.

In Step S9, the wireless communication device 12 calculates the communication channel response matrix H on the basis of the parameters included in the received communication qualities.

In Steps S10a and S10b, the wireless communication device 12 calculates the transmission weights W₁ₜ to W₄ₜ on the basis of the communication channel response matrix H calculated in Step S9, and the wireless communication device 13 calculates the reception weights W₁ᵣ to W₄ᵣ on the basis of the communication channel response matrix H calculated in Step S3. Steps S9, S10a and S10b are executed during the execution of Steps S3 through S8.

In this manner, the wireless communication device 13 at the data receiving side calculates the antenna communication qualities of the respective antennas 71, 72, ..., 74 of the wireless communication device 12 at the data transmitting side, and transmits information about the calculated antenna communication qualities to the wireless communication device 12. In accordance with the information about the antenna communication qualities of the respective antennas 71, 72, ..., 74 received from the wireless communication device 13, the wireless communication device 12 controls the transmission powers of the respective antennas 71, 72, ..., 74. Thus, even if the wireless communication devices 12 and 13 are situated in a non-line-of-sight environment, information can be transmitted in parallel. It is also possible to enlarge the area wherein parallel transmission of information is available, and moreover, narrowing of the communication bandwidth can be suppressed.

Further, the transmission power controller 42 of the wireless communication device 12 averages the antenna communication qualities of the individual antennas 71, 72, ..., 74, and controls the transmission powers of the antennas 71, 72, ..., 74 in accordance with the respective averaged antenna communication qualities. This makes it possible to reduce the influence of noise on the transmission power control.

In the foregoing, the wireless communication device 13 at the data receiving side calculates the antenna communication qualities of the respective antenna 71, 72, ..., 74 and feeds back the calculated antenna communication qualities to the wireless communication device 12. Alternatively, the wireless communication device 12 may be configured to calculate the antenna communication qualities. For example, the wireless communication device 13 feeds back, to the wireless communication device 12, the CQIs of the communication channels between the antennas 71, 72, ..., 74 and the antennas 81, 82, ..., 84. The communication quality receiver 41 of the wireless communication device 12 receives the CQIs from the wireless communication device 13. The wireless communication device 12 is provided with a communication quality calculator which calculates, based on the CQIs received by the communication quality receiver 41, sums of the CQIs of the respective antennas 71, 72, ..., 74, as explained above with reference to FIG. 5. The transmission power controller 42 controls the transmission powers of the respective antennas 71, 72, ..., 74 in accordance with the CQIs (sums of the CQIs) of the respective antennas 71, 72, ..., 74 calculated by the communication quality calculator and the RIs included in the received communication qualities. In this case, the communication quality transmitter 113 of the wireless communication device 13 needs to transmit information indicating which of the CQIs calculated by the communication quality calculator 112 is associated with which of the communication channels between the antennas 71, 72, ..., 74 and the antennas 81, 82, ..., 84. The communication quality calculator of the wireless communication device 12 calculates the CQIs of the respective antennas 71, 72, ..., 74 on the basis of the received CQIs and the information indicating which of the received CQIs corresponds to which of the communication channels.

Also, in the above description, the transmission power controller 42 controls the transmission powers of the respective antennas 71, 72, ..., 74 in accordance with the CQIs and the RIs. Alternatively, the transmission powers may be controlled in accordance with the CQIs only. In this case, the communication quality transmitter 113 of the wireless communication device 13 need not feed back the RIs to the wireless communication device 12.

Although the foregoing description is directed to MIMO communication using 4 x 4 antennas, the invention is similarly applicable to MIMO communication using M x N antennas.

Also, the wireless communication device 12 may be configured to include the aforementioned blocks of the wireless communication device 13, and the wireless communication device 13 may be configured to include the aforementioned blocks of the wireless communication device 12.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Reference Signs List

- 1, 2:: wireless communication device
- 1a:: communication quality receiver
- 1b:: transmission power controller
- 1 ca to 1 cd:: multiplier
- 1 da to 1 dd, 2ca to 2cd:: antenna
- 2a:: communication quality calculator
- 2b:: communication quality transmitter

## Claims

1. A wireless communication device equipped with a plurality of antennas and configured to perform parallel communication of data, comprising:
a communication quality receiver configured to receive, from a receiving-side wireless communication device that has received the data, information about antenna communication quality of each of said plurality of antennas; and
a transmission power controller configured to control transmission power of each of said plurality of antennas, in accordance with the antenna communication qualities received by the communication quality receiver.

2. The wireless communication device according to claim 1, wherein the transmission power controller includes a communication quality averaging unit configured to average the individual antenna communication qualities, and controls the transmission powers of the respective antennas in accordance with the averaged antenna communication qualities averaged by the communication quality averaging unit.

3. The wireless communication device according to claim 1, wherein:
the antenna communication qualities include CQIs and RI of communication channels between the wireless communication device and the receiving-side wireless communication device, and
the transmission power controller controls the transmission powers of the respective antennas in accordance with sums of the corresponding CQIs and the RI.

4. The wireless communication device according to claim 3, wherein the transmission power controller controls the transmission powers of the respective antennas in accordance with reciprocals of the corresponding sums.

5. A wireless communication device equipped with a plurality of antennas and configured to perform parallel communication of data, comprising:
a communication quality calculator configured to calculate, based on a pilot signal included in the data received thereby, an antenna communication quality of each of a plurality of transmitting antennas of a transmitting-side wireless communication device that has transmitted the data; and
a communication quality transmitter configured to transmit, to the transmitting-side wireless communication device, information about the antenna communication qualities calculated by the communication quality calculator.

6. The wireless communication device according to claim 5, wherein the communication quality calculator calculates a communication quality of each of communication channels between each of said plurality of transmitting antennas of the transmitting-side wireless communication device and said plurality of antennas of the wireless communication device, and calculates a sum of the calculated communication qualities of each of the communication channels, as the antenna communication quality of the corresponding transmitting antenna.

7. A wireless communication device equipped with a plurality of antennas and configured to perform parallel communication of data, comprising:
a communication quality receiver configured to receive, from a receiving-side wireless communication device that has received the data, information about communication qualities of communication channels between the wireless communication device and the receiving-side wireless communication device;
a communication quality calculator configured to calculate an antenna communication quality of each of said plurality of antennas, based on the communication qualities received by the communication quality receiver; and
a transmission power controller configured to control transmission power of each of said plurality of antennas, in accordance with the antenna communication qualities calculated by the communication quality calculator.

8. A transmission power control method for a wireless communication device equipped with a plurality of antennas and configured to perform parallel communication of data, comprising:
receiving information about antenna communication quality of each of said plurality of antennas from a receiving-side wireless communication device that has received the data; and
controlling transmission power of each of said plurality of antennas, in accordance with the received antenna communication qualities.

9. A communication quality transmission method for a wireless communication device equipped with a plurality of antennas and configured to perform parallel communication of data, comprising:
calculating, based on a pilot signal included in the data received by the wireless communication device, an antenna communication quality of each of a plurality of transmitting antennas of a transmitting-side wireless communication device that has transmitted the data; and
transmitting information about the calculated antenna communication qualities to the transmitting-side wireless communication device.

10. A transmission power control method for a wireless communication device equipped with a plurality of antennas and configured to perform parallel communication of data, comprising:
receiving, from a receiving-side wireless communication device that has received the data, information about communication qualities of communication channels between the wireless communication device and the receiving-side wireless communication device;
calculating an antenna communication quality of each of said plurality of antennas, based on the received communication qualities; and
controlling transmission power of each of said plurality of antennas, in accordance with the calculated antenna communication qualities.
